Europäisches Patentamt

European Patent Office

Office européen des brevets

(19)

(11) Veröffentlichungsnummer: **0 143 196**
**B1**

(12) # EUROPÄISCHE PATENTSCHRIFT

(45) Veröffentlichungstag der Patentschrift:
**24.06.87**

(51) Int. Cl.⁴: **B 29 B 7/76**, B 29 B 7/74

(21) Anmeldenummer: **84110157.9**

(22) Anmeldetag: **25.08.84**

(54) **Mischkopf zum Erzeugen eines vorzugsweise chemisch reaktionsfähigen Gemisches aus mindestens zwei Kunststoffkomponenten.**

(30) Priorität: **02.09.83 DE 3331731**

(43) Veröffentlichungstag der Anmeldung:
**05.06.85 Patentblatt 85/23**

(45) Bekanntmachung des Hinweises auf die Patenterteilung:
**24.06.87 Patentblatt 87/26**

(84) Benannte Vertragsstaaten:
**BE DE FR GB IT NL SE**

(56) Entgegenhaltungen:
**EP - A - 0 070 486**
**EP - A - 0 084 672**
**DE - A - 2 413 337**
**DE - A - 3 005 231**
**DE - B - 2 065 841**

(73) Patentinhaber: **Elastogran Maschinenbau GmbH, D-8021 Strasslach (DE)**

(72) Erfinder: **Taubenmann, Peter, Strindbergstrasse 1, D-8000 Muenchen 60 (DE)**

(74) Vertreter: **Springer, Hans Jörg, Dr. et al, BASF Aktiengesellschaft Patentabteilung Carl-Bosch-Strasse 38, D-6700 Ludwigshafen (DE)**

**Beschreibung**

Die Erfindung betrifft einen Mischkopf zum Erzeugen eines vorzugsweise chemisch reaktionsfähigen Gemisches aus mindestens zwei Kunststoffkomponenten mit einer Mischkammer, die Eintrittsöffnungen für die einzelnen Kunststoffkomponenten und eine Austrittsöffnung für das Kunststoffkomponentengemisch besitzt, mit einem in der Mischkammer angeordneten, querschnittsgleichen Ausstosskolben, der mit einem durch Druckmittel betätigbaren Arbeitskolben verbunden und aus einer die Eintrittsöffnungen offenlassenden Mischstellung bis in den Bereich der vorderen Austrittsöffnung, dabei die Eintrittsöffnungen gegenüber der Mischkammer absperrend, hin- und herbewegbar ist, sowie mit einem durch Druckmittel in die Mischkammer ein- bzw. aus dieser herausschiebbaren Drosselorgan, wobei das Drosselorgan mit einem Kolben verbunden ist und der Arbeitskolben in der Bewegungsrichtung des Ausstosskolbens zum Erreichen der Mischstellung beginnend kurz vor und endend mit dem Erreichen der einen Endstellung ein Druckmittel verdrängt, durch das der Kolben unter Einschiebung des Drosselorgans in die Mischkammer bewegbar ist. Ein solcher Mischkopf ist durch die DE-A-3 005 231 bekannt.

Bei einem bekannten Mischkopf (DE-A-2 065 841) öffnen und schliessen wechselweise und gleichzeitig die Eintrittsöffnungen für die einzelnen Kunststoffkomponenten, ohne dass besondere Steuerungsmittel für das Öffnen und Schliessen vorgesehen werden müssen, da bei der hin- und hergehenden Bewegung des Ausstosskolbens die Eintrittsöffnungen jeweils überfahren werden. Mit dem Gemischausstoss ist ferner verbunden die Reinigung der Mischkammerwandung von Gemischresten, die durch den mit der Mischkammer querschnittsgleichen Ausstosskolben beim Ausfahren entfernt werden. Zur Erzeugung eines Mischungsvordrucks in der Mischkammer, der massgeblich für die Homogenität des Gemisches und die Porenbildung bei geschäumten Formteilen ist, ist zwischen den Eintrittsöffnungen und der Austrittsöffnung ein Drosselorgan hydraulisch in die Mischkammer ein- bzw. aus dieser herausschiebbar. Da der Ausstosskolben mit dem Drosselorgan zusammenstossen kann, ist Vorsorge zu treffen, dass dies nicht passiert.

Man hat bereits auf verschiedene Weise den Mangel des unbeabsichtigten Aufeinandertreffens von Ausstosskolben und Drosselorgan zu beheben versucht. Nach der DE-A-2 413 337 beispielsweise wird die Steuerung des hydraulischen Antriebsaggregats für den Ausstosskolben benutzt, um ein gesondertes hydraulisches Antriebsaggregat für das Drosselorgan zu steuern. Dabei tritt jedoch am Ende des Einspritzvorganges eine Veränderung der Vermischungsbedingungen ein, da zunächst das Drosselorgan in seine Ausgangsstellung zurückgefahren und erst dann die Einspritzöffnungen verschlossen werden.

Um ein Zusammenstossen des Drosselorgans mit dem in der Mischkammer angeordneten Ausstosskolben zu verhindern ist es gemäss der DE-A-3 005 231 weiterhin bekannt, den Druckmittelkreislauf für die Bewegung des Ausstosskolbens mit dem für die Bewegung des Drosselorgans zusammenzuschalten und für die Bewegung des Drosselorgans die Bewegung des Ausstosskolbens als Steuerungsimpuls heranzuziehen und umgekehrt. Dabei wird während der Bewegung des Ausstosskolbens zum Erreichen der Mischstellung durch den ihm zugeordneten Arbeitskolben Druckmittel verdrängt, durch das das Drosselorgan in die Mischkammer eingeschoben wird. Bewegt sich der Ausstosskolben in die andere Endstellung (Ausstossstellung) wird das Drosselorgan unter der Kraft einer Feder wieder zurückgezogen, wenn der Druck im Druckmittelkreis kleiner als der Federdruck ist. Ein solcher Mischkopf gewährleistet zwar eine sehr genaue Dosierung der Kunststoffkomponenten sowie eine gute Vermischungsintensität, erfordert aber einen vergleichsweise höheren technischen Aufwand. Für verschiedene Anwendungsfälle erscheint dieser Aufwand nicht gerechtfertigt, insbesondere dann nicht, wenn primär ein beruhigter Austrag des Gemischstromes angestrebt wird, die Mischgüte aber durch zusätzliche Massnahmen nicht weiter verbessert werden muss.

Mit der Erfindung soll ein Mischkopf geschaffen werden mit einer einfachen und sicheren Steuerung des Drosselorgans in Abhängigkeit von der Bewegung des Ausstosskolbens.

Zur Lösung dieser Aufgabe werden die Massnahmen nach dem Kennzeichen des Anspruchs 1 vorgeschlagen.

Nach der Erfindung wird somit zu Beginn des Einspritzvorganges zuerst der Ausstosskolben bewegt. Bei Erreichen einer bestimmten, mechanisch definierten Position des Ausstosskolbens, bei welcher der Weg für das Drosselorgan freigegeben ist, wird das Drosselorgan in die Mischkammer eingeschoben, während gleichzeitig der Ausstosskolben seine Bewegung fortsetzt. Das Drosselorgan erreicht seine Endstellung in der Mischkammer, bevor der Ausstosskolben die Eintrittsöffnungen für die Kunststoffkomponenten freigibt. Mit anderen Worten, der eigentliche Einspritzvorgang beginnt erst dann, wenn das Drosselorgan bereits vollständig in die Mischkammer eingeschoben ist, so dass eine Beruhigung des Gemischstromes auch während der Phase zu Beginn des Einspritzvorganges gewährleistet ist. Gleiches trifft für die Phase am Ende des Einspritzvorganges zu, da hierbei der Ausstosskolben zunächst so weit aus seiner Mischstellung bewegt wird bis die Eintrittsöffnungen gegenüber der Mischkammer verschlossen sind und eine Rezirkulation der Kunststoffkomponenten möglich ist. Dabei wird der Ausstosskolben in einer weiteren genau definierten Stellung angehalten und das Drosselorgan aus der Mischkammer herausgeschoben. Unmittelbar anschliessend erfolgt der Resthub des Ausstosskolbens. Seine Zwischenstellung muss der Ausstosskolben dabei nicht genau einhalten. Es ist lediglich erforderlich, dass die Eintrittsöffnungen gegenüber der Mischkammer abgesperrt sind und gleichzeitig der Ausstosskolben das Drosselorgan noch nicht berührt.

Der erfindungsgemässe Mischkopf zeichnet sich durch eine absolut sichere Folgesteuerung aus, so dass die Gefahr der Selbstzerstörung nicht besteht. Auf die sonst üblichen elektrischen Grenztaster, die vor allem im rauhen Handhabungsbetrieb ein hohes Schadenrisiko darstellen und zudem die Bewegbarkeit des Mischkopfes einschränken, kann verzichtet werden. Die Steuerung des Ausstosskolbens und des Drosselorgans erfolgt hydraulisch-mechanisch; von den entsprechenden Bauelementen ist kein Verschleiss zu erwarten; sie können zudem sehr kompakt am Mischkopf integriert werden, so dass dessen Baugrösse und sein Gewicht klein bleiben.

Weitere vorteilhafte Ausgestaltungen des Mischkopfes nach der Erfindung sind Gegenstand der Unteransprüche 2 bis 5.

Im folgenden wird die Erfindung unter Hinweis auf die Zeichnungen anhand eines Ausführungsbeispiels näher erläutert.

Es zeigt:

Fig. 1 den Mischkopf im Längsschnitt mit Flussschema, wobei der Ausstosskolben die Ausstossstellung A einnimmt,

Fig. 2 den in Fig. 1 dargestellten Mischkopf mit dem Ausstosskolben in einer Zwischenstellung und

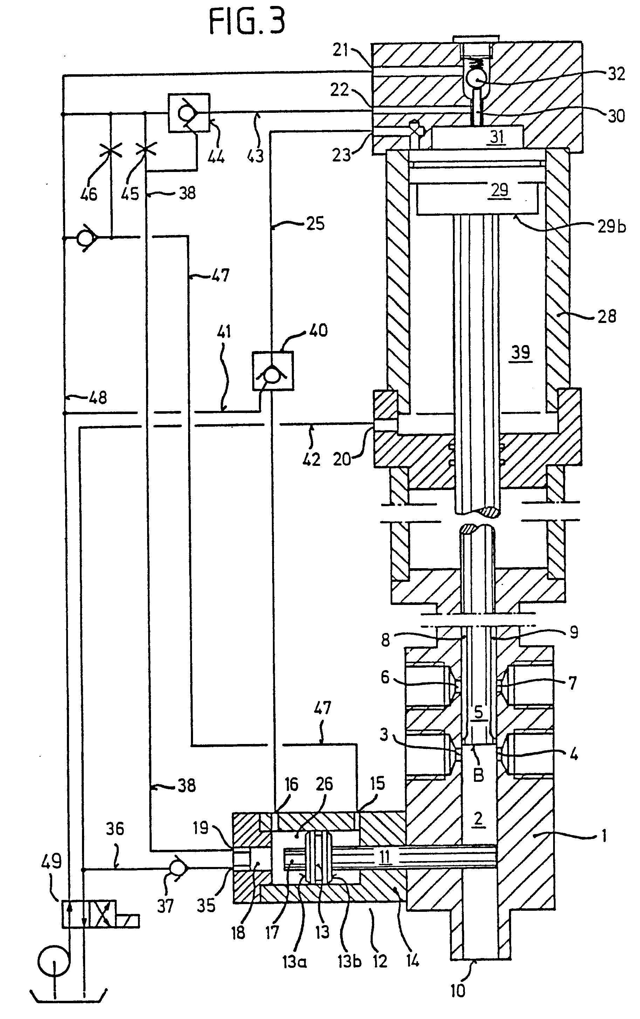

Fig. 3 den Mischkopf mit dem Ausstosskolben in Mischstellung B.

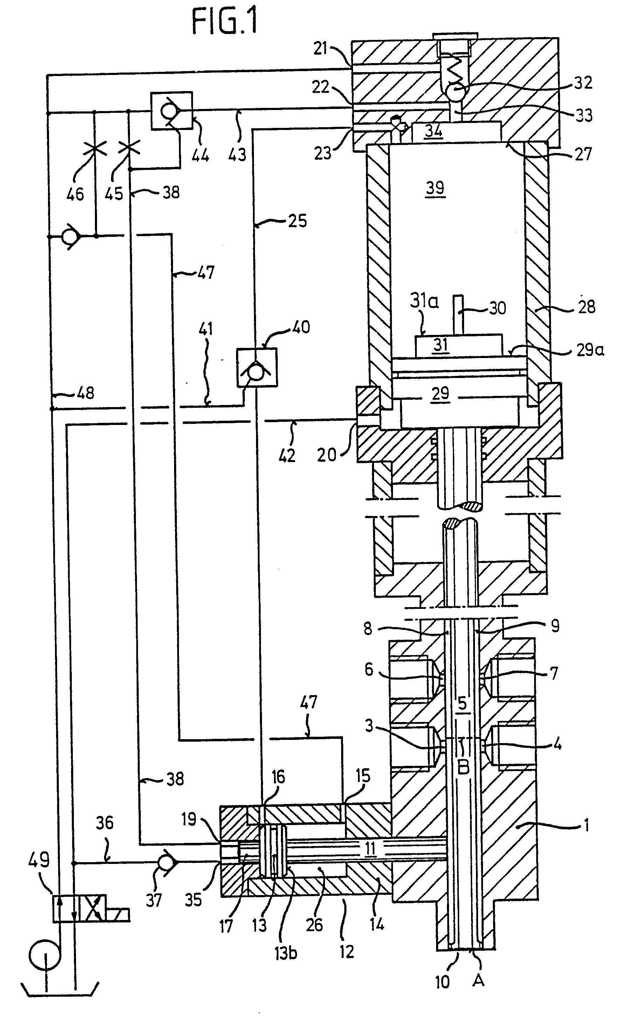

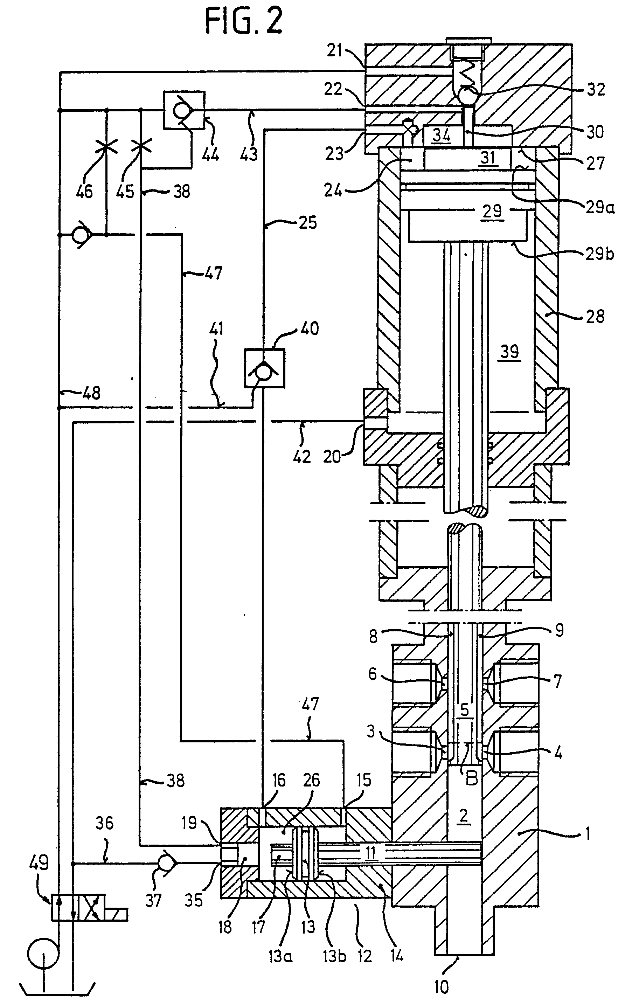

Im wesentlichen besteht der Mischkopf aus einem Gehäuse 1, in dem eine im allgemeinen kreiszylindrische Mischkammer 2 ausgebildet ist. In die Mischkammer führen Eintrittsöffnungen 3 und 4, an die, direkt oder über Düsen, Vorlaufleitungen für die Zuführung der Kunststoffkomponenten angeschlossen sind. Mit 5 ist ein Ausstosskolben bezeichnet, der in der Mischkammer hin- und herbewegbar ist, um den Zulauf der Kunststoffkomponenten zu steuern und gleichzeitig die Mischkammer zu reinigen. Der Ausstosskolben ist in Fig. 1 in seiner vorgeschobenen Stellung — Ausstossstellung A — veranschaulicht. In dieser Stellung treffen die Kunststoffkomponenten nicht aufeinander, sondern werden über Rücklaufnuten 8 und 9 durch die Öffnungen 6 und 7 wieder zu Vorratsbehältern zurückgeführt. Die Mischstellung nimmt der Ausstosskolben ein, wenn seine untere Stirnfläche die gestrichelt gezeichnete Linie B erreicht und die Zwischenstellung bei Erreichen der in Fig. 2 gezeigten Position. Dabei ist wenigstens ein Drosselorgan 11 zwischen den Eintrittsöffnungen 3 und 4 und der Austrittsöffnung 10 für das Kunststoffkomponentengemisch in die Mischkammer 2 vorschiebbar.

Das Drosselorgan 11 besteht vorzugsweise aus einem oder mehreren zylinderförmigen Stift(en) und wird von einem Kolbenzylinderaggregat 12 gesteuert, das am Gehäuse 1 des Mischkopfes befestigt ist. Kolben 13 und Zylinder 14 dieses Kolbenzylinderaggregats sind als hydraulisches Stellglied ausgebildet. Die Betätigung des Kolbens 13 erfolgt durch Zufuhr eines hydraulischen Druckmittels durch die Anschlüsse 15 bzw. 16 zu der einen oder zu der anderen Kolbenseite. Auf seiner freien Stellfläche 13a trägt der Kolben 13 einen Vorsprung 17, der auf eine Ausnehmung 18 wirkt. In der dem Drosselorgan 11 gegenüberliegenden Stirnwand des Zylinders 14 sind in der Ausnehmung 18 ausserdem vorgesehen eine Öffnung 19, an die eine Steuerleitung 38 angeschlossen ist sowie eine Öffnung 35. Auf diese Weise ist ein ungedrosselter Abfluss des Druckmittels vom Anschluss 16 zur Öffnung 35 erreichbar.

Die Betätigung des Ausstosskolbens 5 erfolgt durch Zufuhr eines Druckmittels in den Arbeitszylinder 28, in welchem ein mit dem Ausstosskolben fest verbundener Arbeitskolben 29 enthalten ist. Hierfür sind die Druckmittelanschlüsse 20, 21 und 22 vorgesehen. Des weiteren besitzt der Arbeitszylinder einen Anschluss 23, welcher in der Stirnfläche 27 mündet und über die Leitung 25 mit dem Anschluss 16 des Kolbenzylinderaggregats 12 verbunden ist. Der Arbeitskolben 29 weist auf seiner dem Ausstosskolben 5 abgewandten Stellfläche 29a zwei tauchkolbenartige Vorsprünge 30 und 31 auf, von denen der Vorsprung 30 mit einem federbelasteten Rückschlagventil 32, welches am Ende einer Bohrung 33 in der Stirnfläche 27 angeordnet ist, korrespondiert und der Vorsprung 31 mit einer form- und querschnittsgleichen Ausnehmung 34 zusammenarbeitet. Die Vorsprünge 30 und 31 bzw. die Ausnehmung 34 und die Bohrung 33 sind vorzugsweise jeweils koaxial zueinander angeordnet. Die Anschlüsse 21 und 22 münden in dem Rückschlagventil 32 bzw. in der Bohrung 33.

Die Zufuhr von Druckmittel über den Anschluss 20 führt dazu, dass der Arbeitskolben 29 in seine obere Endstellung bewegt wird. Kurz vor dieser Endstellung wird eine genau definierte Zwischenstellung des Arbeitskolbens erreicht, wenn die Stirnfläche 31a des Vorsprungs 31 die Ausnehmung 34 abdeckt, wobei gleichzeitig in einem Ringraum 24 zwischen der Stellfläche 29a und der Stirnfläche 27 Druckmittel eingeschlossen wird. Dabei steht der Ausstosskolben 5 ebenfalls in einer Zwischenstellung, in der zum einen der Bewegungsweg für das Drosselorgan 11 freigegeben ist und zum anderen die Eintrittsöffnungen 3 und 4 gegenüber der Mischkammer 2 noch abgesperrt und die Kunststoffkomponenten noch zu Vorratsbehältern zurückführbar sind. In dieser Position kann das Drosselorgan durch entsprechende Druckmittelbeaufschlagung des ihm zugeordneten Kolbens 13 in die Mischkammer eingeschoben werden. Die Steuerung des Drosselorgans in Abhängigkeit in der Stellung des Ausstosskolbens erfolgt zwangsläufig, indem der Druckmittelkreis für die Bewegung des Arbeitskolbens mit dem Druckmittelkreis für die Bewegung des Drosselorgans zusammengeschaltet ist. Durch die weitere Bewegung des Arbeitskolbens infolge Druckmittelzufuhr in den Druckraum 39 vor der Stellfläche 29b wird das im Ringraum 24 eingeschlossene Druckmittel aus dem Arbeitszylinder verdrängt und gelangt über die Leitung 25 in den den Kolben 13 des Drosselorgans 11 in die Drosselstellung beaufschlagenden Druckraum 26. Das Volumen des Ringraums 24 muss hierfür so bemessen sein, dass die Bewegung des Drosselorgans beendet ist, bevor die Eintrittsöffnungen 3 und 4 in die Mischkammer 2 freigegeben sind. Am Ende dieser Bewegung des Drosselorgans wird zwischen dem Vorsprung 17 und der Ausnehmung 18 im Zylinder 14 ein Ringspalt freigegeben. Durch diesen Ringspalt strömt das aus dem Ringraum 24 verdrängte Druckmittel, ohne nachteiligen Druckaufbau über die Öffnung 35, das Rückschlagventil 37 durch die Leitung 36 und tritt in die Leitung 42 ein, bis der Arbeitskolben 29 seine Endstellung, entsprechend der Mischstellung B des Ausstosskolbens 5, erreicht hat. Für den beschriebenen Funktionsablauf ist es erforderlich, in der Leitung 25 ein schaltbares Ventil 40 vorzusehen, welches nach dem Erreichen der Zwischenstellung des Arbeits- bzw. Ausstosskolbens schaltbar ist. Hierzu ist das Ventil 40 über eine Steuerleitung 41 mit der Druckmittelleitung 48 verbunden. Als schaltbares Ventil eignet sich beispielsweise ein durch einen hydraulischen Steuerdruck sperrbares Rückschlagventil. Bei dieser Anordnung ist sichergestellt, dass das Drosselorgan in die Mischkammer eingeschoben wird, bevor der Ausstosskolben die Mischstellung B erreicht.

In der Mischstellung B des Ausstosskolbens 5 ist das federbelastete Rückschlagventil 32 durch den Vorsprung 30 des Arbeitskolbens 29 geöffnet. Zum Erreichen der Ausstossstellung A wird der Druckmittelanschluss 20 entspannt und die Anschlüsse 21 und 22 werden mit Druckmittel beaufschlagt. In der mit dem Anschluss 22 verbundenen Leitung 43 ist ein schaltbares Ventil 44 vorgesehen, so dass zunächst Druckmittel nur über den Anschluss 21 in den Arbeitszylinder 28 gelangen kann und den Arbeitskolben bzw. Ausstosskolben aus der Mischstellung B so lange in Richtung auf die jeweils untere Endstellung verschiebt, bis sich das federbelastete Rückschlagventil 32 schliesst. Das Ventil 44 ist mit der zum Anschluss 19 des Kolbenzylinderaggregats 12 führenden Steuerleitung verbunden, in der ausserdem eine Blende 45 vorgesehen ist. Eine weitere Blende 46 enthält die Leitung 47, die von der Leitung 43 abführt und am Anschluss 15 des Kolbenzylinderaggregats endet, wobei das durch die Leitung fliessende Druckmittel das Drosselorgan 11 aus der Mischkammer 2 herausbewegt, bis dessen Endlage erreicht wird und der Vorsprung 17 des Kolbens die Öffnung 19 des Zylinders 14 verschliesst. In dieser Stellung ist das Drosselorgan vollständig aus der Mischkammer herausgezogen und der Weg für den weiteren Hub des Ausstosskolbens 5 freigegeben. Mit dem Verschliessen der Öffnung 19 steigt der Druck in der Steuerleitung 38 bis das Ventil 44 geschaltet wird. Dadurch wird der Anschluss 22 über die Leitung 43 mit Druckmittel beaufschlagt und der Arbeitskolben 29 in seine untere Endstellung bewegt.

Unter der Voraussetzung, dass ein Mischvorgang durchgeführt werden soll, d.h. der Ausstosskolben 5 von der Stellung A in die Stellung B gebracht werden soll, wird ein Magnetventil 49 betätigt und der Anschluss 20 über die Leitung 42 mit Druckmittel beaufschlagt. Die Druckmittelleitung 48 sowie die von ihr abzweigenden Leitungen sind entlastet. Die Druckmittelpumpe liefert Druckmittel mit zeitlich konstanter Durchsatzmenge in den Druckraum 39 vor der Stellfläche 29b des Arbeitskolbens 29, wodurch der Arbeitskolben in Richtung auf seine obere Endstellung bewegt wird, bis die Stirnfläche 31a des Vorsprungs 31 die Ausnehmung 34 abdeckt und sich ein mit Druckmittel gefüllter Ringraum 24 ausbildet. Während der weiteren Bewegung des Arbeitskolbens strömt das Druckmittel aus dem Ringraum 24 über die Leitung 25 in das Kolbenzylinderaggregat 12 und schiebt das Drosselorgan 11 in die Mischkammer 2 ein. Nach dem Einschieben des Drosselorgans in die Mischkammer gelangt der Arbeitskolben in seine obere Endstellung bzw. der Ausstosskolben in die Mischstellung B.

Zur Beendigung des Mischvorgangs wird wiederum das Magnetventil 49 betätigt und Druckmittel über die Leitung 48 zum Anschluss 21 gefördert. Der Anschluss 20 ist entlastet. Hierdurch wird der Arbeitskolben so lange verschoben, bis sich das federbelastete Rückschlagventil 32 schliesst. Gleichzeitig gelangen Teilströme in die Steuerleitung 41 sowie über die Blenden 45 und 46 in die Steuerleitung 38 und die Druckmittelleitung 47. Letzterer bewegt den Kolben 13 unter Herausschieben des Drosselorgans 11 aus der Mischkammer 2. Der Teilstrom in der Steuerleitung 38 wird in den Druckraum 26 geführt und tritt so lange über die Öffnung 35 in die ein Rückschlagventil 37 enthaltende und zum Druckmitteltank führende Leitung 36 ein, bis der Kolben 13 des Drosselorgans an der Stirnwnd des Zylinders 14 anliegt und die Öffnung 19 verschliesst. In der Steuerleitung 38 baut sich in der Folge ein höherer Druck auf und das Ventil 44 wird geschaltet, so dass Druckmittel in den Anschluss 22 strömt. Arbeitskolben 29 sowie Ausstosskolben 5 werden hierdurch in die jeweils untere Endstellung, d.h. Ausstossstellung A für den Ausstosskolben, verschoben.

**Patentansprüche**

1. Mischkopf zum Erzeugen eines vorzugsweise chemisch reaktionsfähigen Gemisches aus mindestens zwei Kunststoffkomponenten, mit einer Mischkammer (2), die Eintrittsöffnungen (3 und 4) für die einzelnen Kunststoffkomponenten und eine Austrittsöffnung (10) für das Kunststoffkomponentengemisch besitzt, mit einem in der Mischkammer (2) angeordneten, querschnittsgleichen Ausstosskolben (5), der mit einem durch Druckmittel betätigbaren Arbeitskolben (29) verbunden und aus einer die Eintrittsöffnungen (3 und 4) offenlassenden Mischstellung B bis in den Bereich der vorderen Austrittsöffnung (10), dabei die Eintrittsöffnungen (3 und 4) gegenüber der Mischkammer (2) absperrend, hin- und herbewegbar ist, sowie mit einem durch Druckmittel in die Mischkammer (2) ein- bzw. aus dieser herausschiebbaren Drosselorgan (11), wobei das Drosselorgan mit einem Kolben (13) verbunden ist und der Arbeitskolben (29) in der Bewegungsrichtung des Ausstosskolbens (5) zum Erreichen der Mischstellung B beginnend kurz vor und endend mit dem Erreichen der einen Endstellung ein Druckmittel verdrängt, durch das der Kolben (13) unter Einschiebung des Drosselorgans (11) in die Mischkammer (2) bewegbar ist, dadurch gekennzeichnet, dass für die Bewegung des Ausstosskolbens (5) zum Erreichen der Ausstossstellung A der Arbeitskolben (29) über zwei Anschlüsse (21 und 22) mit Druckmittel beaufschlagbar, von denen der eine Anschluss (21) kurz nach dem Verlassen der Endstellung des Arbeitskolbens verschliessbar, gleichzeitig das Drosselorgan (11) aus der Mischkammer (2) herausschiebbar und anschliessend der andere Anschluss (22) mit Druckmittel beaufschlagbar ist.

2. Mischkopf nach Anspruch 1, dadurch gekennzeichnet, dass die dem Ausstosskolben (5) abgewandte Stellfläche (29a) des Arbeitskolbens (29) tauchkolbenartige Vorsprünge (30 und 31) aufweist, von denen der Vorsprung (30) mit einem federbelasteten Rückschlagventil (32) korrespondiert und der Vorsprung (31) mit einer form- und querschnittsgleichen Ausnehmung (34) in der Arbeitszylinder-Stirnwand (27) kurz vor und bei Erreichen der einen Endstellung der hin- und hergehenden Kolbenbewegung zusammenarbeitet.

3. Mischkopf nach den Ansprüchen 1 und 2, dadurch gekennzeichnet, dass der Druckmittelkreis für die Bewegung des Arbeitskolbens (29) und der Druckmittelkreis für die Bewegung des Drosselorgans (11) jewels ein in Abhängigkeit von einem Steuerdruck schaltbares Ventil (40, 44) aufweist, von denen das eine Ventil (40) nach dem Erreichen der Ausnehmung (34) in der Arbeitszylinder-Stirnwand (27) durch den Vorsprung (31) des Arbeitskolbens (29) und das andere Ventil (44) nach dem Verlassen der Drosselstellung durch den Kolben (13) des Drosselorgans (11) geschaltet wird.

4. Mischkopf nach Anspruch 3, dadurch gekennzeichnet, dass das Ventil (40) mit einer Steuerleitung (41) verbunden ist, welche an die zum Anschluss (21) führende Druckmittelleitung (48) angeschlossen ist, und dass das Ventil (44) mit einer Steuerleitung (38) verbunden ist, welche in den den Kolben (13) des Drosselorgans (11) in die Drosselstellung beaufschlagenden Druckraum (26) führt, wobei die Öffnung (19) dieser Steuerleitung (38) durch den Kolben (13) verschliessbar ist.

5. Mischkopf nach Anspruch 4, dadurch gekennzeichnet, dass der Kolben (13) auf seiner dem Drosselorgan (11) abgewandten Stellfläche einen tauchkolbenartigen Vorsprung (17) aufweist, der mit einer Ausnehmung (18) in der Stirnwand des Zylinders (14) korrespondiert, wobei die Öffnungen (19 und 35) in dieser Ausnehmung angebracht sind.

## Claims

1. A mixing head for producing a preferably chemialy reactive mixture of at least two plastics components, comprising a mixing chamber (2) which has inlet orifices (3 and 4) for the individual plastics components and an outlet orifice (10) for the plastics component mixture, an expulsion plunger (5) located in the mixing chamber (2) and having the same cross-section as the mixing chamber, the said plunger being connected to a working piston (29) which can be actuated by a pressure medium, and being movable to and fro between a mixing position B in which the inlet orifices (3 and 4) are left open, and a position in the region of the front outlet orifice (10), in which it seals off the inlet orifices (3 and 4) from the mixing chamber (2), as well as a restrictor (11) which can be moved into and out of the mixing chamber (2) by a pressure medium, wherein the restrictor is connected to a piston (13), and the working piston (29), in the direction of motion of the expulsion plunger (5) for reaching the mixing position B, displaces, starting shortly before one of its end positions and ending upon reaching this end position, a pressure medium by means of which the piston (13) which pushes the restrictor (11) into the mixing chamber (2) can be moved, characterized in that, for moving the expulsion plunger (5) until expulsion position A is reached, the working piston (29) can be subjected to the action of the pressure medium via two connections (21 and 22), of which one connection (21) can be closed shortly after the working piston leaves its end position, and at the same time the restrictor (11) can be pushed out of the mixing chamber (2), following which pressure medium can be supplied to the other connection (22).

2. A mixing head as claimed in claim 1, wherein the end face (29a) of the working piston (29) which faces away from the expulsion plunger (5) is provided with plunger-like projections (30 and 31), of which one projection (30) cooperates with a springloaded non-return valve (32), and the other projection (31) cooperates with a recess (34), which matches it in shape and cross-section, in the working cylinder end wall (27) shortly before reaching, and upon reaching, one end position of the piston which moves to and fro.

3. A mixing head as claimed in claims 1 and 2, characterized in that the pressure medium circuit for moving the working piston (29) and the pressure medium circuit for moving the restrictor (11) each have a valve (40, 44) which can be switched as a function of a control pressure, valve (40) being switched when the projection (31) on the working piston (29) reaches the recess (34) in the working cylinder end wall (27), and the other valve (44) being switched after the piston (13) of the restrictor (11) has left the throttling position.

4. A mixing head as claimed in claim 3, characterized in that valve (40) is connected to a control line (41) which is linked to the pressure medium line (48) which leads to the connection (21), and that valve (44) is connected to a control line (38) which leads into the pressure chamber (26) which urges the piston (13) of the restrictor (11) into the throttling position, the orifice (19) of this control line (38) being closable by the piston (13).

5. A mixing head as claimed in claim 4, characterized in that the piston (13) has a plunger-like projection (17) on its end face facing away from the restrictor (11), which projection cooperates with a recess (18) in the end face of the cylinder (14), orifices (19 and 35) being arranged in this recess.

## Revcendications

1. Tête mélangeuse pour produire un mélange capable, de préférence, de réaction chimique, d'au moins deux composantes de matières synthétiques, avec une chambre de mélange (2) qui possède des ouvertures d'entrée (3 et 4) pour les différentes composantes de matières synthétiques et une ouverture de sortie (10) pour le mélange de composantes de matières synthétiques, avec un piston d'éjection (5) de section constante, disposé dans la chambre de mélange (2), piston qui est relié à un piston de travail (29) actionnable par un agent sous pression et qui peut être mû dans un sens et dans l'autre, d'une position de mélange B laissant ouverts les ouvertures d'entrée (3 et 4), à la région de l'ouverture de sortie antérieure (10), en fermant alors les ouvertures d'entrée (3 et 4) par rapport à la chambre de mélange (2), ainsi qu'avec un organe d'étranglement (11) pouvant être déplacé par un agent sous pression en entrant dans la chambre de mélange (2), respectivement en sortant, l'organe d'étranglement étant relié à un piston (13) et le piston de travail (29) comprimant un agent sous pression dans la direction de déplacement du piston d'éjection (5) pour atteindre la position de mélange B d'abord peu avant, et cessant sa compression lorsqu'est atteinte l'une des positions extrêmes, agent par lequel le piston (13) est mobile avec introduction de l'organe d'étranglement (11) dans la chambre de mélange (2), caractérisée en ce que pour le mouvement du piston d'éjection (5) pour atteindre la position d'éjection A, le piston de travail (29) peut être sollicité par l'agent sous pression en passant par deux raccords (21 et 22), dont l'un des raccords, (21), peut être fermé peu après l'abandon de la position terminale du piston de travail en même temps que l'organe d'étranglement (11) peut être déplacé hors de la chambre de mélange (2), et dont l'autre raccord, (22), peut ensuite être alimenté par l'agent sous pression.

2. Tête mélangeuse suivant la revendication 1, caractérisée en ce que la surface de positionnement (29a) du piston de travail (29), non orientée vers le piston d'éjection (5), présente des saillants (30, 31) du genre de pistons plongeurs, dont le saillant (30) correspond à une valve de non retour (32) chargée par ressort et dont le saillant (31) coopère avec un logement (34) de forme et de section égales dans la paroi frontale (27) du cylindre de travail, peu avant et lorsqu'est atteinte l'une des positions extrêmes du mouvement alternatif du piston.

3. Tête mélangeuse suivant les revendications 1 et 2, caractérisée en ce que le circuit de l'agent sous pression pour le déplacement du piston de travail (29) et le circuit de l'agent sous pression pour le déplacement de l'organe d'étranglement (11) présentent chaque fois une valve (40, 44) pouvant être commandée par une pression de commande, l'une des valves, (40), étant commandée après que la saillie (31) du piston de travail (29) ait atteint le logement (34) dans la paroi frontale (27) du cylindre de travail, et l'autre valve, (44), étant commandée après que le piston (13) de l'organe d'étranglement (11) ait quitté la position d'étranglement.

4. Tête mélangeuse suivant la revendication 3, caractérisée en ce que la valve (40) est reliée à un conduit de commande (41) qui est raccordé au conduit (48) de l'agent sous pression allant au raccord (21), et en ce que la valve (44) est reliée à un conduit de commande (38) qui va à l'espace de pression (26) sollicitant le piston (13) de l'organe d'étranglement (11) vers la position d'étranglement, l'ouverture (19) de ce conduit de commande (38) pouvant être fermée par le piston (13).

5. Tête mélangeuse suivant la revendication 4, caractérisée en ce que le piston (13) présente une saillie (17) du genre d'un piston plongeur sur sa surface de positionnement non orientée vers l'organe d'étranglement (11), cette saillie (17) correspondant à un logement (18) dans la paroi frontale du cylindre (14), les ouvertures (19 et 35) étant pratiquées dans ce logement.

# FIG.1

# FIG. 2

# FIG.3